# EUROPÄISCHE PATENTSCHRIFT

(11) **EP 0 895 667 B1**
(45) Veröffentlichungstag und Bekanntmachung des Hinweises auf die Patenterteilung: **12.01.2000**
(21) Anmeldenummer: 97918128.6
(22) Anmeldetag: 10.04.1997
(51) Int. Cl.: H02K 5/22

(54) **AGGREGAT**
UNIT
UNITE

(30) Priorität: 22.04.1996 DE 19615706
(43) Veröffentlichungstag der Anmeldung: 10.02.1999
(73) Patentinhaber: Continental Teves AG & Co. oHG, 60488 Frankfurt (DE)
(72) Erfinder: HEISE, Andreas, D-64546 Mörfelden (DE)
(74) Vertreter: Blum, Klaus-Dieter
(86) Internationale Anmeldenummer: EP9701780
(87) Internationale Veröffentlichungsnummer: WO9740570

(56) Entgegenhaltungen:
- DE-A- 4 015 080
- DE-A- 4 411 152
- DE-A- 4 411 960

## Beschreibung

Die Erfindung bezieht sich auf ein Aggregat gemäß dem Oberbegriff des Anspruchs 1, bestehend aus einem elektrischen Motor, einem Zwischengehäuse mit zwei Außenflächen sowie einem elektronischen Regler (DE-A-4 411 152).

Ein derartiges Aggregat ist auch aus der DE 43 20 005 A1 bekannt. Das Zwischengehäuse bildet hier ein Gehäuse für eine Kolbenpumpe, die vom Motor angetrieben wird, wobei das Zwischengehäuse zusätzlich Magnetventile aufnimmt. Es ist für den Einsatz in einer Bremsanlage vorgesehen. Der elektronische Regler steuert dabei sowohl den Motor als auch die elektromagnetischen Ventile.

Um ein kompakt gebautes Aggregat zu erhalten, weist das Zwischengehäuse zwei gegenüberliegende Außenflächen auf, wobei an die eine Fläche der Motor und an die andere Fläche das Gehäuse des elektronischen Reglers befestigt wird. Die elektrische Verbindung zwischen dem Motor und dem Regler erfolgt mittels mindestens zweier elektrischer Leiter, die durch eine Bohrung im Zwischengehäuse geführt sind. Gemäß der genannten Offenlegungsschrift sind die Leiter in eine Kunststoffhülse eingespritzt, die einstückig mit dem Abschlußschild des Motors, der auf der Außenfläche aufliegt, ausgebildet ist. Am Regler ist ein Steckverbinder befestigt, in den die freiliegenden Enden der elektrischen Leiter eingesteckt werden.

Eine andere Ausführung gemäß der genannten Offenlegungsschrift sieht vor, daß ein flexibles Kabel durch die Öffnung geführt wird, das auf der Reglerseite in den Steckverbinder eingesteckt wird und auf der Motorseite mit den Bürsten des Kommutators verbunden wird.

Die erste Ausführung hat den Nachteil, daß die Hülse starr ausgebildet werden muß, damit die Steckverbindung beim Zusammensetzen des Aggregats zustandekommen kann.

Die zweite Ausführung hat den Nachteil, daß der Elektromotor nicht vorgefertigt werden kann. Vielmehr muß zunächst die Verbindungsleitung durch die Öffnung im Zwischengehäuse gefädelt werden, um dann mit den Bürsten auf der Trägerplatte verbunden zu werden. Erst dann kann das Gehäuse des Elektromotors aufgesetzt werden.

Die Erfindung beruht daher auf der Aufgabe, mit einfachen Mitteln sicherzustellen, daß das Aggregat in einfacher Weise aus vorgefertigten Baueinheiten zusammengesetzt werden kann.

Dazu wird ein Elektromotor mit den Merkmalen des Hauptanspruchs vorgeschlagen. Im Unterschied zu der Ausführung gemäß der DE 43 20 005 A1 ist vorgesehen, daß im Reglergehäuse ein Kanal verläuft, der mit dem Kanal im Zwischengehäuse fluchtet, und daß beide Kanäle über einen Innendurchmesser verfügen, der nur wenig größer ist als der Außendurchmesser des elektrischen Leiters. Dies eröffnet die Möglichkeit, als elektrische Verbindung eine handelsübliche einadrige massive aber in sich bewegliche Leitung einzusetzen, die beim Zusammenbau in den genannten Kanälen gestützt wird. Auf diese Weise wird beim Einstecken der Leitung in die Steckverbindung eine ausreichende Längskraft aufgebracht, so daß das abisolierte Leitungsende in die Steckverbindung eingeführt werden kann, ohne daß die Leitung ausknickt.

In vorteilhafter Weise befindet sich die Steckverbindung im Reglergehäuse, so daß die Leitung mit dem Elektromotor eine Baueinheit bildet. Das heißt, der Elektromotor kann zusammen mit der Leitung vormontiert werden und, da sie beweglich ausgebildet ist, beim Transport des Motors seitlich abgeknickt werden.

Das Reglergehäuse weist eine Trennwand auf, die das Gehäuse in mindestens zwei Räume unterteilt, wobei der eine Raum die Spulen der Magnetventile aufnimmt und mit seiner offenen Seite dem Zwischengehäuse zugewandt ist. In dem anderen Raum, der sich zur anderen Seite hin öffnet, befindet sich auf einem Träger eine Leiterplatine mit Leitungsbahnen, an die elektronische Bauteile angelötet sind, die die Steuerung des Aggregats bilden. Diese befinden sich auf der Seite der Leiterplatinen , die der Trennwand abgewandt sind. Der Steckverbinder befindet sich nun auf eben dieser Seite, so daß er zusammen mit den elektronischen Bauteilen in einem Arbeitsgang auf der Leiterplatine verlötet werden kann. Es ist allerdings auch eine Ausführung denkbar, bei der die Leiterbahnen unmittelbar auf der Trennwand ausgebildet sind, so daß die Trennwand gleichzeitig die Trägerplatte und die Platine bildet.

Unterhalb der Trennwand befindet sich in einer Verlängerung des Führungskanals eine Kammer, die eine Dichtmasse aufnimmt, die von der Leitung durchstoßen wird. Auf diese Weise wird die Leitung gegenüber der Öffnung in der Trennwand sowie die beiden Räume des Reglergehäuses gegeneinander flüssigkeitsdicht abgedichtet.

Es läßt sich nämlich beim Betrieb des Aggregats nicht vollständig vermeiden, daß in den Raum, der die Spulen aufnimmt, Flüssigkeit eindringt. Es muß aber unter allen Umständen vermieden werden, daß diese Flüssigkeit in den anderen Raum mit den Leiterbahnen und den elektronischen Bauteilen gelangt.

Eine für diese Anordnung geeignete Steckverbindung wird im folgenden beschrieben.

Diese besteht aus einem Grundkörper aus verzinntem Kupfer, der unmittelbar auf die Leiterplatine aufgelötet werden kann. Dieser Grundkörper weist eine Kontaktfläche für das Drahtende auf. Eine Federklammer sorgt dafür, daß das Drahtende gegen diese Kontaktfläche gedrückt wird.

Damit das Drahtende zur Montage bzw. Demontage leicht in den Klemmverbinder hinein- bzw. aus diesem herausgezogen werden kann, wird vorgeschlagen, daß die Anpreßfläche der Federklammer längs des einzuklemmenden Drahtes in beiden Richtungen vom Draht weggebogen ist.

Es sind somit am der Federklammer keine Kanten vorhanden, die sich in den Draht einkerben und bewirken würden, daß sich der Draht in Form eines Widerhakens an der Federklammer festhakt.

Eine einfache Bauweise des Steckverbinders besteht darin, daß der Grundkörper aus einem mehrfach geknickten Streifen besteht, wobei von einem Auflagenabschnitt ausgehend die beiden Enden U-förmig nach innen geknickt sind, wobei mittels der einen Umknickung die Federklammer an einem Ende des Grundkörpers befestigt wird. Am Ende der anderen Umknickung ist eine Verlängerung vorgesehen, die senkrecht zum Auflagenabschnitt aufgebogen und an der die Kontaktfläche ausgebildet ist. Im Zentrum des Auflagenabschnitts befindet sich eine Öffnung, die als Eintrittsöffnung für das Drahtende fungiert. Von ihr können zwei Lappen nach unten abgebogen sein, die in eine Öffnung der Leiterplatine eingreifen und die Steckverbindung vor dem Verlöten auf der Leiterplatine dort fixieren.

Im folgenden wird anhand eines Ausführungsbeispiels die Erfindung näher erläutert. Dabei zeigen die
- Fig. 1: eine prinzipielle Darstellung des Aggregats, die
- Fig. 2a und 2b: die Ausführung eines Steckverbinders und die
- Fig. 3: die Steckverbindung mit eingeklemmtem Drahtende.

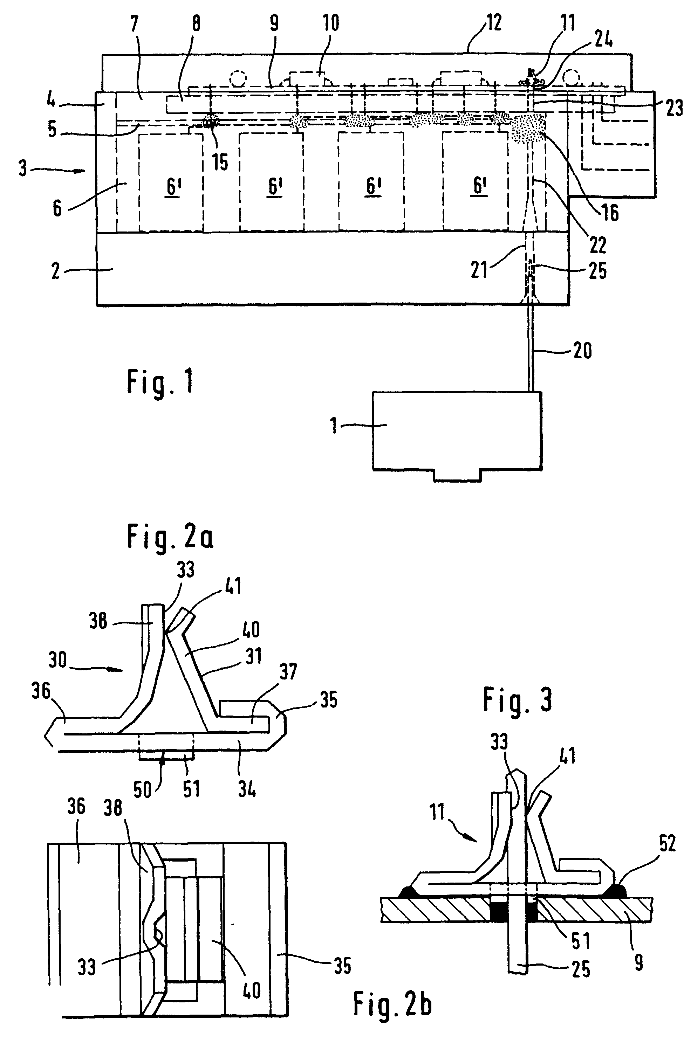

Zunächst wird auf die Fig. 1 Bezug genommen. Das Aggregat besteht aus einem elektrischen Motor 1, einem Zwischengehäuse 2 und einem Regler 3.

Das Zwischengehäuse 2 dient der Aufnahme einer Kolbenpumpe sowie von elektromagnetischen Ventilen und wird daher auch als Ventilblock 2 bezeichnet.

Der Regler 3 besteht aus einem Gehäuse 4 mit einer Trennwand 5, wobei in einem ersten Raum 6, dessen offene Seite dem Ventilblock 2 zugewandt ist, mehrere Spulen 7 angeordnet sind, die auf aus dem Ventilblock herausragenden Ventildomen aufgesteckt sind, in deren Innerem die Magnetanker zur Betätigung der Ventilschließkörper geführt sind. Oberhalb der Trennwand 5 befindet sich ein weiterer Raum 7, in dem auf einer Trägerplatte 8 eine Leiterplatine 9 untergebracht ist, auf deren Oberseite die elektronischen Bauteile 10 sowie noch näher zu beschreibende Steckverbinder 11 angeordnet sind. Wie schon erläutert können die Leiterbahnen auch unmittelbar auf die Trennwand aufgesetzt sein. Der obere Raum 7 wird durch einen Deckel 12 flüssigkeitsdicht verschlossen.

Die Trennwand 5 ist mit Durchbrüchen 15 versehen, durch die hindurch Leitungen geführt sind, mit denen die Magnete 7 bzw. der Motor 1 mit den Leiterbahnen auf der Leiterplatine 9 verbunden werden. Diese Durchbrüche werden durch hier punktiert dargestellte Polster 16 aus Silikon-Masse verschlossen, durch die die Leitungs- bzw. Verbindungsdrähte hindurchgesteckt werden.

Bei dieser dauerelastischen Vergußmasse handelt es sich z.B. um ein Produkt mit der Produktbezeichnung SIL Gel 6111 weiß. Diese Vergußmasse hat eine flüssige bis pastöse Konsistenz und klebende Wirkung, so daß ein durch sie hindurchgehender gesteckter Draht flüssigkeitsdicht umschlossen wird.

Auf diese Weise wird verhindert, daß Flüssigkeit bzw. Öle, die in die Kammer 6 mit den Spulen 7 eindringen, weil das Gehäuse 4 nicht sicher gegenüber dem Ventilblock 2 abgedichtet ist, in den Raum 7 mit der Elektronik gelangen können.

Der Regler 3 wird vormontiert, indem die Spulen 7 und die Elektronik in das Gehäuse 4 eingesetzt werden. Anschließend wird der so vormontierte Regler auf die eine Seite des Ventilblocks 2 aufgesetzt. Ebenso wird der Motor 1 vormontiert und mit einer Leitung 20 versehen, welche die Verbindung zur Steuerelektronik herstellen soll. Die Leitung 20 ist eine handelsüblichen Leitung, z.B. H07V-U(NYA), die biegbar ist und somit zum Transport des Motors an den Motor angelegt werden kann.

Zur Montage des Motors 1 wird die Leitung 20 durch einen Kanal 21 im Ventilblock sowie einen Kanal 22 im Gehäuse 4 hindurchgeführt. Beide Kanäle erstrecken sich jeweils senkrecht zu den Seitenflächen des Ventilblocks, an denen der Motor bzw. der Regler befestigt werden.

Um die Einführung zu vereinfachen, haben sowohl der Kanal 21 im Ventilblock als auch der Kanal 22 im Reglergehäuse 4 einen Öffnungstrichter. Die Besonderheit besteht aber darin, daß der Durchmesser der Kanäle 21, 22 nicht wesentlich größer ist als der Außendurchmesser der Leitung 20, so daß diese in den Kanälen von den Kanalwänden gestützt wird.

Wird nun der Motor 1 auf den Ventilblock 2 zubewegt, bewegt sich die Leitung 20 mit dem abisolierten Leitungsende 25 durch die Kanäle 21 und 22 auf die Leiterplatine 9 zu. Dabei wird zuerst die Silikonmasse 16, die in einer nicht näher dargestellten Kammer im Gehäuse 4 des Reglers angeordnet ist, durchstoßen. Sodann durchläuft das abisolierte Leitungsende einen Kanal 23 im Träger 8 sowie eine Durchbohrung 24 in der Leiterplatine 9, die mit einer Öffnung im Steckverbinder 11 fluchtet. Das Leitungsende 25 wird abschließend im Steckverbinder eingeklemmt, wobei eine gasdichte, vibrationsfeste elektrische Verbindung zwischen dem Motor und den Leiterbahnen bzw. den elektronischen Bauteilen auf der Leiterplatine 9 hergestellt wird.

In der Regel werden zwei elektrische Verbindungen notwendig sein, so daß entsprechend zwei Steckverbinder und eine entsprechende Anzahl von Kanälen im Ventilblock 2 und im Gehäuse 4 vorgesehen sind.

Mit den Kanälen 21, 22 im Ventilblock bzw. Reglergehäuse, der Silikonmasse 16 und den Kanälen 23 im Träger 8 und der Durchbohrung 24 wird eine ausreichende Stützung der Leitung 20 gewährleistet, um die Klemmkräfte überwinden zu können, ohne daß die elastische Leitung 20 ab- oder ausknickt.

Der Steckverbinder kann wie in den Fig. 2 und 3 dargestellt ausgebildet werden. Die Fig. 2 zeigt einen Längsschnitt durch einen Steckverbinder 11, der aus einem Grundkörper 30 und einer Federklammer 31 besteht. Der Grundkörper 30 besteht aus verzinntem Kupfer und dient im wesentlichen der Stromleitung.

Die Federklammer 31 wird aus einer nicht rostenden Stahllegierung hergestellt und dient im wesentlichen dazu, das einzuklemmende Leitungsende 25 gegen eine entsprechende Kontaktfläche 33 des Grundkörpers zu drücken. Die Federklammer sollte aus nicht mit Zinn verlötbarem Material bestehen, damit ein Verlöten der Federklammer an der Kontaktfläche, z.B. in einem Reflow-Lötprozess, vermieden wird.

Der Grundkörper 30 wird durch mehrfaches Abknicken eines Längsstreifens gebildet. Der Längsstreifen bildet dabei einen Auflagenabschnitt 34, dessen beiden Enden 35, 36 nach innen abgeknickt werden. Das eine Ende erfaßt dabei den Fuß 37 der Federklammer 31, wodurch diese am Grundkörper 30 gehalten wird.

Das andere Ende 36 wird, nachdem es nach innen geknickt ist, noch einmal in etwa senkrecht zum Auflagenstück 34 aufgeknickt, so daß es einen Arm 38 bildet, an dessen nach innen weisenden Fläche die Kontaktfläche 33 ausgebildet ist, die sich in etwa in der Verlängerung des Zentrums des Auflagenabschnittes 34 befindet.

Vom Fuß 37 der Federklammer 31 verläuft ein Abschnitt 40 der Federklammer 31, der senrecht zum Auflagenabschnitt 34 verläuft, wobei das obere Ende des Abschnitts 40 der Federklammer 31 noch einmal nach außen abgeknickt ist und eine Abknickstelle 41 bildet.

Der Arm 30 sowie der Abschnitt 40 der Federklammer 31 verlaufen trichterförmig aufeinander zu, wobei das abgeknickte obere Ende der Federklammer zur Anlage an die Kontaktfläche 33 kommt. Die Kontaktfläche 30 bzw. die Abknickstelle 41 können mit Führungsvertiefungen versehen werden. Die Abknickstelle 41 ist in Richtung des einzuführenden Drahtes leicht gerundet, so daß der Draht sowohl leicht eingefädelt als auch ohne Widerstand ausgefädelt werden kann.

In der Auflagenfläche 34 ist eine Öffnung 50 vorgesehen, aus der heraus zwei Laschen 51 abgeknickt sein können, die in die Öffnung 24 der Leiterplatine 9 eingreifen und den Steckverbinder vor dem Verlöten auf der Leiterplatine 9 fixieren.

Die Fig. 3 zeigt den Steckverbinder mit einem eingeklemmten Drahtende 25. Der Steckverbinder 11 ist auf der Leiterplatine 9 verlötet (Lot 52). Das Drahtende 25 klemmt zwischen der Kontaktfläche 33 des aufgeknickten Armes 38 des Grundkörpers 30 sowie der Abknickstelle 41 der Federklammer 31.

## Patentansprüche

1. Aggregat, bestehend aus einem elektrischen Motor (1), einem Zwischengehäuse (2) mit zwei Außenflächen und einem elektronischen Regler (3) in einem Reglergehäuse (4), wobei der Regler aus elektronischen Bauteilen (10) auf Leiterbahnen besteht, mindestens einem Steckverbinder (11) sowie einer elektrischen Verbindung (20) zwischen dem Motor (1) und dem elektronischen Regler (3), die durch einen Kanal (21) im Zwischengehäuse (2) geführt ist, wobei mindestens ein Ende der Leitung (20) in der Steckverbindung (11) eingesteckt ist, dadurch **gekennzeichnet**, daß im Reglergehäuse (4) ein weiterer Kanal (22) vorgesehen ist, der mit dem Kanal (21) im Zwischengehäuse (2) fluchtet und daß beide Kanäle (21,22) über einen Innendurchmesser verfügen, der nur wenig größer ist als der Außendurchmesser der Leitung (20).

2. Aggregat nach Anspruch 1, dadurch **gekennzeichnet**, daß der Steckverbinder (11) auf dem Leiterbahnträger im Regler (3) befestigt ist und daß die Leitung (20) mit dem Motor (1) eine Baueinheit bildet.

3. Aggregat nach Anspruch 2, dadurch **gekennzeichnet**, daß der Steckverbinder sowie die anderen elektronischen Bauteile auf derselben Seite des Trägers (8) befestigt sind.

4. Aggregat nach Anspruch 3, dadurch **gekennzeichnet**, daß die Leiterbahnen auf einer Leiterplatine (9) ausgebildet sind, die auf einem Träger (8) aufgesetzt ist, der mit einem weiteren Kanal (23) versehen ist, der mit der Einführungsöffnung des Steckverbinders (11) fluchtet, wobei der Steckverbinder sowie die anderen elektronischen Bauteile auf der dem Träger (8) abgewandten Seite (9) der Leiterplatine befestigt sind.

5. Aggregat nach einem der vorhergehenden Ansprüche, dadurch **gekennzeichnet**, daß das Gehäuse des Reglers (4) durch eine Trennwand (5) in zwei Räume getrennt ist, wobei der eine Raum (6) Spulen (7) aufnimmt, seine offene Seite dem Zwischengehäuse (2) zugewandt ist und der andere Raum den Leiterbahnträger (8)) aufnimmt, und daß die Durchbrüche in der Trennwand (5) zwischen den beiden Räumen durch Silikonpolster (16) abgedichtet sind.

6. Aggregat nach Anspruch 5, dadurch **gekennzeichnet**, daß der Kanal (22) im Reglergehäuse (4) in eine Kammer mündet, die mit Silikon-Masse (16) ausgefüllt ist, und daß die Leitung (20) bei der Montage des Elektromotors (1) durch diese Masse hindurchgedrückt wird.

7. Aggregat nach einem oder mehreren der Ansprüche 1 bis 6, dadurch **gekennzeichnet**, daß dieses einen Steckverbinder (11) zur Aufnahme eines abisolierten Leitungsendes (25) enthält, wobei der Steckverbinder (11) aus einem Grundkörper (30) aus verzinntem Kupfer, der mindestens eine Kontaktfläche (33) aufweist, und aus einer am Grundkörper (30) befestigten Federklammer (31), die das Leitungsende (25) gegen die Kontaktfläche (33) drückt, besteht.

8. Aggregat nach Anspruch 7, dadurch **gekennzeichnet**, daß eine Abkickstelle (41) der Federklammer (31), die den Draht gegen die Kontaktstelle (33) drückt, längs des einzuklemmenden Drahtes (20) in beiden Richtungen vom Draht weggebogen ist.

9. Aggregat nach Anspruch 7, dadurch **gekennzeichnet**, daß Steckverbinder (11) aus einem Streifen gebildet ist, der einen Auflagenabschnitt (34) bildet, dessen beiden Enden U-förmig nach innen geknickt sind, wobei die Umknickung an den einem Ende die Federklammer (31) einklemmt und eine Verlängerung des anderen Endes senkrecht zum Auflagenabschnitt (34) nach oben aufgeknickt ist, um die Kontaktfläche (33) zu bilden.

10. Aggregat nach Anspruch 8, dadurch **gekennzeichnet**, daß im Zentrum des Auflagenabschnitts (34) eine Öffnung (50) vorgesehen ist, die die Eintrittsöffnung bildet, und daß von dieser Öffnung zwei Lappen (51) nach unten abgeknickt sind.

## Claims

1. An assembly consisting of an electric motor (1), an intermediate housing (2) with two outside surfaces, and an electronic control unit (3) in a control unit housing (4), with the control unit comprising electronic components (10) on conductive tracks, of at least one connector (11) as well as of an electric connection means (20) between the motor (1) and the electronic control unit (3) which is passed through a channel (21) in the intermediate housing (2), with at least one end of the line means (20) being inserted into the connector (11),
**characterized** in that, within the control unit housing (4), another channel (22) is provided which is in alignment with the channel (21) in the intermediate housing (2), and in that the two channels (21,22) have an inside diameter which is but slightly larger than the outside diameter of the line means (20).

2. An assembly as claimed in claim 1,
**characterized** in that the connector (11) is fastened to the conductive track carrier within the control unit (3) and in that the line means (20) forms a constructional unit with the motor (1).

3. An assembly as claimed in claim 2,
**characterized** in that the connector as well as the other electronic components are fastened to the same side of the carrier (8).

4. An assembly as claimed in claim 3,
**characterized** in that the conductive tracks are formed on a printed circuit board (9) placed onto a carrier (8) provided with another channel (23) which is in alignment with the insertion aperture of the connector (11), with the connector as well as the other electronic components being fastened on the side (9) of the printed circuit board which is averted from the carrier (8).

5. An assembly as claimed in any one of the preceding claims,
**characterized** in that the housing of the control unit (4) is subdivided by a separating wall (5) into two chambers, with one of the chambers (6) receiving coils (7) and its open side facing the intermediate housing (2), with the other chamber receiving the conductive track carrier (8), and in that the apertures in the separating wall (5) between the two chambers are sealed by silicon cushions (16).

6. An assembly as claimed in claim 5,
**characterized** in that the channel (22) in the control unit housing (4) ends in a chamber filled with silicon compound (16), and in that the line means (20) is pressed through this compound when the electric motor (1) is mounted.

7. An assembly as claimed in any one or more of claims 1 to 6,
**characterized** in that the assembly includes a connector (11) designed to receive a bared line means end (25), the said connector (11) consisting of a basic body (30) of tin-plated copper which at least has one contact surface (33) as well as of a spring clip (31) fastened to the basic body (30) and pressing the line means end (25) against the contact surface (33).

8. An assembly as claimed in claim 7,
**characterized** in that a bend (41) of the spring clip (31) which presses the wire against the contact surface (33) is bent along the wire (20), which is to be clamped, in both directions away from the wire.

9. An assembly as claimed in claim 7,
**characterized** in that the connector (11) is produced by a strip which forms an abutment section (34) the two ends of which are bent inwards in a U-shaped manner, and the bending section of the one end clamps the spring clip (31) and an extension of the other end is bent upwards perpendicularly to the abutment section (34) in order to form the contact surface (33).

10. An assembly as claimed in claim 8,
**characterized** in that an aperture (50) is provided in the centre of the abutment section (34) which forms the entry aperture, and in that two flaps (51) are bent downwards from this aperture.

## Revendications

1. Groupe, constitué d'un moteur électrique (1), d'un boîtier intermédiaire (2), comportant deux surfaces extérieures, et d'un régulateur électronique (3) disposé dans un boîtier de régulateur (4), le régulateur étant constitué de composants électroniques (10), disposés sur des pistes conductrices, d'au moins un connecteur à enfichage (11) et d'une liaison électrique (20), entre le moteur (1) et le régulateur électronique (3), qu'on fait passer dans un conduit (21) ménagé dans le boîtier intermédiaire (2), au moins une extrémité de la ligne (20) étant insérée dans le connecteur à enfichage (11), caractérisé en ce que, dans le boîtier de régulateur (4), il est prévu un autre conduit (22) qui est situé dans l'alignement du conduit (21) ménagé dans le boîtier intermédiaire (2), et en ce que les deux conduits (21, 22) présentent un diamètre intérieur qui n'est supérieur que de peu au diamètre extérieur de la ligne (20).

2. Groupe suivant la revendication 1, caractérisé en ce que le connecteur à enfichage (11) est fixé sur le support de pistes conductrices dans le régulateur (3) et en ce que la ligne (20) forme une unité structurelle avec le moteur (1) .

3. Groupe suivant la revendication 2, caractérisé en ce que le connecteur à enfichage et les autres composants électroniques sont fixés du même côté du support (8).

4. Groupe suivant la revendication 3, caractérisé en ce que les pistes conductrices sont réalisées sur une plaquette à circuit imprimé (9) qui est posée sur un support (8), lequel est pourvu d'un autre conduit (23) qui est situé dans l'alignement de l'ouverture d'introduction du connecteur à enfiehage (11), le connecteur à enfichage et les autres composants électroniques étant fixés sur la face de la plaquette à circuit imprimé (9) qui est située à l'opposé du support (8).

5. Groupe suivant l'une des revendications précédentes, caractérisé en ce que le boîtier du régulateur (4) est séparé par une cloison séparatrice (5) en deux compartiments, un premier compartiment (6) recevant des bobines (6'), son côté ouvert faisant face au boîtier intermédiaire (2), et l'autre compartiment recevant le support de pistes conductrices (8), et en ce que l'étanchéité des passages ménagés dans la cloison séparatrice (5) entre les deux compartiments est assurée au moyen de tampons en silicone (16).

6. Groupe suivant la revendication 5, caractérisé en ce que le conduit (22) du boîtier de régulateur (4) débouche dans une chambre qui est remplie d'une masse de silicone(16) et en ce que, lors du montage du moteur électrique (1), la ligne (20) est enfoncée à travers cette masse.

7. Groupe suivant une ou plusieurs des revendications 1 à 6, caractérisé en ce que celui-ci contient un connecteur à enfichage (11) destiné à recevoir une extrémité de ligne (25) dénudée, le connecteur à enfichage (11) étant constitué d'un corps de base (30) en cuivre revêtu de zinc, qui comporte au moins une surface de contact (33), et d'une pince élastique (31) qui est fixée sur le corps de base (30) et applique l'extrémité de ligne (25) en appui sur la surface de contact (33).

8. Groupe suivant la revendication 7, caractérisé en ce qu'un emplacement coudé (41) de la pince élastique (31), qui applique le conducteur en appui sur l'emplacement de contact (33), est, le long du conducteur (20) à pincer, plié à l'écart du conducteur dans les deux sens.

9. Groupe suivant la revendication 7, caractérisé en ce que le connecteur à enfichage (11) est constitué d'une bande qui forme une section d'appui (34) dont les deux extrémités sont repliées vers l'intérieur en forme de U, la partie repliée en U située à une première extrémité serrant la pince élastique (31) et un prolongement de l'autre extrémité étant plié vers le haut, perpendiculairement à la section d'appui (34), afin de former la surface de contact (33).

10. Groupe suivant la revendication 8, caractérisé en ce qu'au centre de la section d'appui (34), il est prévu une ouverture (50) qui forme l'ouverture d'introduction et en ce que deux pattes (51) sont pliées vers le bas à partir de cette ouverture.
